# EUROPEAN PATENT APPLICATION

(11) **EP 4 568 074 A1**
(43) Date of publication of application: **11.06.2025**
(21) Application number: 24218421.6
(22) Date of filing: 09.12.2024
(51) Int. Cl.: H02K 5/06, H02K 7/116, H02K 11/33, H02K 9/19

(54) **HOUSING ASSEMBLY, ELECTRIC DRIVE DEVICE AND VEHICLE**

(30) Priority: 07.12.2023 CN 202311677897
(71) Applicant: Valeo eAutomotive Germany GmbH, 91056 Erlangen (DE)
(72) Inventor: ZHANG, Joshua-Shu, 91056 Erlangen (DE); ZHAO, Wanchao, 91056 Erlangen (DE); SUN, Yawei, 91056 Erlangen (DE); JIN, Yejin, 91056 Erlangen (DE)
(74) Representative: Valeo Powertrain Systems

(57) **Abstract**

The present disclosure relates to a housing assembly (10) for an electric drive device (100), the housing assembly comprising a housing (20) and an electric motor cover (30). The housing (20) comprises a first housing portion (21), the first housing portion (21) at least partially accommodating an electric motor (110) of the electric drive device; and a second housing portion (22) located at one end of the first housing portion (21), the second housing portion (22) accommodating a speed reducer of the electric drive device; the electric motor cover (30) is fitted to another end of the first housing portion (21), and comprises a cover portion (31) and a cavity portion (32), the cavity portion (32) and the first housing portion (21) together forming an electric motor cavity (24) for accommodating the electric motor (110).

## Description

### Technical field

The present disclosure relates to a housing assembly for an electric drive device. The present disclosure further relates to an electric drive device comprising such a housing assembly, and a vehicle comprising such an electric drive device.

### Background art

An electric drive device of a vehicle is used to convert electrical energy into mechanical energy for the vehicle to travel, and may comprise an electric motor, a speed reducer, and a power electronics unit, etc. For compactness and transmission efficiency, housings of the electric motor and the speed reducer in the electric drive device are generally integrated, i.e. a space for accommodating the electric motor and the speed reducer is provided by a common housing. The common housing may also provide a space for accommodating the power electronics unit, so as to further increase the degree of integration of the electric drive device. However, the higher the rated power of the electric motor, the larger its dimensions, and in particular, the larger the dimensions of the electric motor stator. When the power of an electric drive device of a vehicle is increased for application to a higher-performance vehicle, the dimensions of the electric motor need to be increased, while the dimensions of the speed reducer and the power electronics unit are essentially unchanged. Although the dimensions of the speed reducer and the power electronics unit are essentially unchanged in electric drive devices of different powers, it is still necessary to change the common housing to provide a larger accommodating space to accommodate the electric motor with increased dimensions. Thus, several types of common housings need to be prepared for electric drive devices of different powers, and this increases the cost of components of electric drive devices.

Thus, there is an urgent need to provide an electric drive device in which the power of an electric motor can be changed without needing to change a common housing.

### Summary of the invention

Thus, the present disclosure is intended to solve the abovementioned problem, having the objective of providing a novel housing assembly for an electric drive device, an electric drive device and a vehicle. The housing assembly according to the present disclosure eliminates the need to replace a common housing when accommodating electric motors of different powers, thereby lowering the cost of components of the electric drive device.

The stated objective is achieved by a housing assembly for an electric drive device according to an embodiment of the present disclosure, the housing assembly comprising a housing and an electric motor cover. The housing comprises a first housing portion and a second housing portion located at one end of the first housing portion, the first housing portion at least partially accommodating an electric motor of the electric drive device, and the second housing part accommodating a speed reducer of the electric drive device. The electric motor cover is assembled to another end of the first housing portion, and comprises a cover portion and a cavity portion, the cavity portion and the first housing portion together forming an electric motor cavity for accommodating the electric motor.

If the power of the electric motor of the electric drive device is increased, the dimensions of the electric motor will increase. In the present disclosure, the electric motor cavity for accommodating the electric motor is formed by the first housing portion of the housing and the cavity portion of the electric motor cover, together. Increasing the dimensions of the cavity portion of the electric motor cover allows an electric motor with increased dimensions to be accommodated. When the power of the electric motor is increased, there is no need to replace the housing; it suffices to replace the electric motor cover alone. Thus, for electric drive devices of different powers, it is only necessary to prepare electric motor covers of different specifications, so the cost of components of the electric drive device is reduced.

The housing assembly according to the present disclosure may further have one or more of the following features individually or in combination.

According to an embodiment of the present disclosure, a dimension of the cavity portion is determined according to the power of the electric motor accommodated in the electric drive device. In particular, an increase in the power of the electric motor of the electric drive device causes the length of a stator of the electric motor to increase, so the length of the cavity portion of the electric motor cover is determined according to the power of the electric motor accommodated in the electric drive device.

According to an embodiment of the present disclosure, the first housing portion and the second housing portion are integrally formed. That is, the housings for accommodating the electric motor and the speed reducer in the electric drive device are integrally formed. Consequently, during assembly, there is no need to re-assemble the first housing portion and the second housing portion, so the degree of integration of the electric drive device is increased, and the difficulty of assembly is reduced.

According to an embodiment of the present disclosure, the housing further comprises a third housing portion arranged adjacent to the first housing portion, the third housing portion accommodating a power electronics unit of the electric drive device.

According to an embodiment of the present disclosure, an electric connector for the electric motor of the electric drive device extends from the second housing portion into the first housing portion. The electric connector may be used to connect the electric motor and the power electronics unit of the electric drive device. The electric connector extends into the first housing portion from the end of the first housing portion that is adjacent to the second housing portion, rather than entering the first housing portion from the other end used to install the electric motor cover. Thus, when replacing the electric motor cover of the housing assembly, there is no need to consider the effect on the electric connector, so replacement of the electric motor cover is facilitated.

According to an embodiment of the present disclosure, the electric connector extends from the second housing portion into the third housing portion. That is, the electric connector is able to connect the electric motor located in the first housing portion and the power electronics unit located in the third housing portion via the second housing portion.

According to an embodiment of the present disclosure, the housing assembly is provided with a cooling circuit. A cooling medium for cooling the electric motor, the speed reducer and/or the power electronics unit of the electric drive device circulates in the cooling circuit.

According to an embodiment of the present disclosure, the cooling circuit comprises an oil spray device arranged on the cover portion. The oil spray device is configured to be removably installed on the cover part of the electric motor cover, so that is it possible to replace the electric motor cover alone, with no need to replace the oil spray device. Optionally, it is also possible for the electric motor cover and the oil spray device to be replaced together.

According to an embodiment of the present disclosure, the first housing portion, the second housing portion and the third housing portion are integrally formed by casting. According to the above feature, the housing forms a common housing of the electric motor, the speed reducer and the power electronics unit of the electric drive device. This can further increase the degree of integration of the electric drive device.

The present disclosure further relates to an electric drive device comprising the housing assembly described above.

The present disclosure further relates to a vehicle, comprising the electric drive device described above.

### Brief description of the drawings

To explain the technical solutions of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below have not been drawn by meticulously reducing or enlarging actual dimensions in equal proportion, but focus on showing the substance of the present disclosure.
Fig. 1 shows a schematic block diagram of an electric drive device according to an embodiment of the present disclosure.
Fig. 2 shows an electric drive device according to an embodiment of the present disclosure.
Fig. 3 shows an electric drive device according to an embodiment of the present disclosure, with an electric motor cover of a housing assembly of the electric drive device omitted to show an electric motor stator.
Fig. 4 shows an electric motor cover of a housing assembly of an electric drive device.
Fig. 5 shows a housing assembly of an electric drive device.
Fig. 6 shows an electric connector installed in the housing assembly, the electric connector being used to connect a power electronics unit and an electric motor of the electric drive device.

In all the drawings, identical or similar components are indicated by identical reference numerals.

### Detailed description of the invention

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Words such as "first" and "second" used in the description and claims of the patent application disclosed herein do not denote any order, quantity or importance, and are merely used to distinguish different component parts. Words such as "connected" or "coupled" are not restricted to a physical or mechanical connection, and may include an electrical connection, whether direct or indirect. The terms "upper", "lower", "left", "right" and the like are only used to indicate a relative positional relationship, and when the absolute position of a described object changes, the relative positional relationship may also change accordingly.

In order to facilitate description, the drawings of the present disclosure accordingly simplify or omit components commonly used in the art, such as external connection lines and other components that are irrelevant to the description of the present disclosure. These omitted or simplified components do not affect the understanding of the content of the present disclosure by a person skilled in the art.

An electric drive device of a vehicle generally comprises an electric motor, a speed reducer and a power electronics unit. The electric motor converts inputted electrical energy to rotational mechanical energy; the speed reducer is mechanically coupled to the electric motor, adjusts the speed of rotation and the torque generated by the electric motor, and then transmits same to wheels of the vehicle. The power electronics unit may comprise at least one of an inverter, an on-board charger and a DC-DC converter. The inverter can be used to invert DC outputted by an electrical energy storage means (e.g. a battery or another electrical energy storage means) to AC capable of driving the electric motor; the on-board charger can charge the electrical energy storage means when the vehicle is recovering energy; and the DC-DC converter can convert high-voltage DC outputted by the electrical energy storage means to low-voltage DC suitable for use in a low-voltage system of the vehicle. The electric motor and the speed reducer in the electric drive device are generally arranged adjacent to each other, to facilitate mechanical coupling therebetween. Preferably, the power electronics unit is also arranged adjacent to the electric motor, to shorten the length of an electrical connection cable harness therebetween, and increase the degree of integration of the electric drive device.

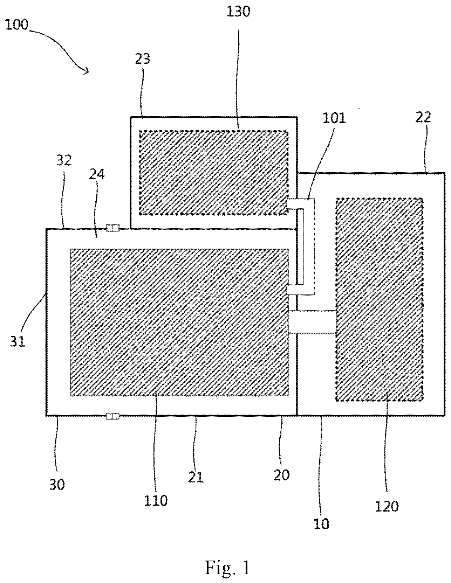

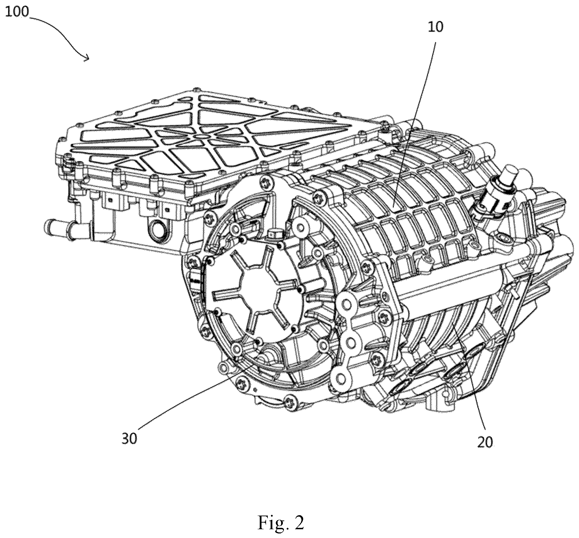

Figs. 1 and 2 show an electric drive device 100 according to an embodiment of the present disclosure, wherein Fig. 1 is a schematic block diagram of the electric drive device 100. The electric drive device 100 comprises an electric motor 110, a speed reducer 120 and a power electronics unit 130. The electric drive device 100 comprises a housing assembly 10; the electric motor 110, the speed reducer 120 and the power electronics unit 130 are all arranged in the housing assembly 10. Specifically, the housing assembly 10 comprises a housing 20, and the housing 20 comprises a first housing part 21, a second housing part 22 and a third housing part 23. The first housing part 21 at least partially accommodates the electric motor 110; the second housing part 22 accommodates the speed reducer 120 and is arranged at one end of the first housing part 21; and the third housing part 23 accommodates the power electronics unit 130 and is arranged adjacent to the first housing part 21.

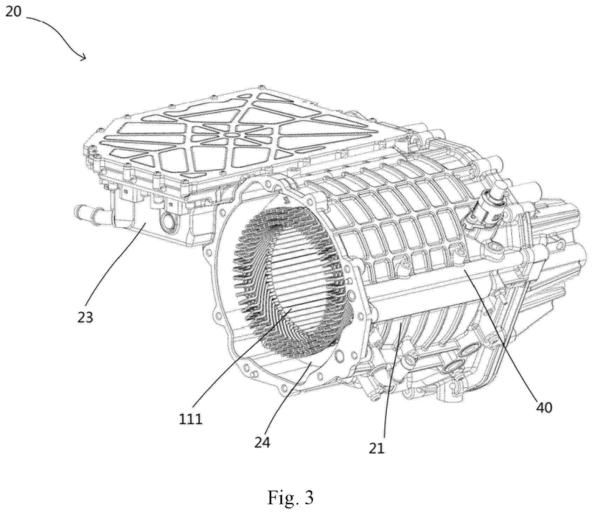

The electric motor 110 may be a synchronous electric motor, or an asynchronous electric motor. When the electric motor 110 is a synchronous electric motor, it may comprise a wound rotor or a permanent magnet rotor. The rated power supplied by the electric motor 110 may be in the range of 10 kW - 50 kW, or even higher. For example, for a rated power supply voltage of 48 V - 350 V, or a higher power supply voltage of up to 800 V, the rated power supplied by the electric motor may be 10 kW - 300 kW. The electric motor 110 may comprise a stator with three-phase windings, or a combination of two three-phase windings or five-phase windings. In particular, Fig. 3 shows a stator 111 of the electric motor 110 accommodated in the first housing part 21.

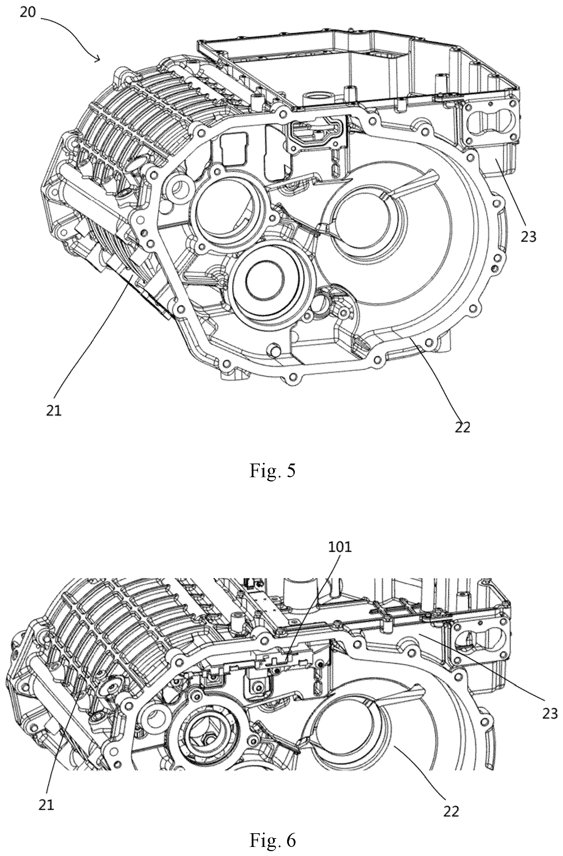

In the embodiment shown in Fig. 5, the first housing part 21, the second housing part 22 and the third housing part 23 of the housing 20 are integrally formed, thereby forming a common housing of the electric motor 110, the speed reducer 120 and the power electronics unit 130 of the electric drive device 100. Optionally, the first housing part 21, the second housing part 22 and the third housing part 23 of the housing 20 are integrally formed by casting. It may also be envisaged that the first housing part 21, the second housing part 22 and the third housing part 23 are separately formed independently and fitted together to form the housing 20. For example, the first housing part 21, the second housing part 22 and the third housing part 23 are arranged adjacently, and fixedly connected by fasteners such as screws.

The housing assembly 10 further comprises an electric motor cover 30 fitted to another end of the first housing part 21. The electric motor cover 30 comprises a cover part 31 and a cavity part 32, the cavity part 32 and the first housing part 21 together forming an electric motor cavity 24 for accommodating the electric motor 110. Thus, the dimensions of the electric motor cavity 24 are determined by the dimensions of the first housing part 21 and the dimensions of the cavity part 32, together. In particular, the length of the electric motor cavity 24 is the sum of the length of the first housing part 21 and the length of the cavity part 32.

In a conventional electric drive device, an electric motor cavity for accommodating an electric motor is generally defined by a housing alone, and an electric motor cover only comprises a cover for closing the cavity, and does not comprise a cavity part. For the same housing, the dimensions of the electric motor cavity are fixed, so the housing is only suitable for an electric motor of one size. The dimensions of the electric motor are determined by its power. When the power of the electric drive device increases, the power and dimensions of the electric motor will also increase accordingly, so it is necessary to provide the electric drive device with a replacement housing defining a larger electric motor cavity, so as to accommodate the electric motor with increased dimensions. However, when the power of the electric drive device increases, the dimensions of the speed reducer and the power electronics unit are essentially unchanged. Replacement of the housing when only the dimensions of the electric motor cavity need to be changed increases the cost of components of the electric drive device.

Conversely, in the housing assembly 10 according to the present disclosure, the dimensions of the electric motor cavity 24 are determined by the first housing part 21 of the housing 20 and the cavity part 32 of the electric motor cover 30, together. Therefore, the dimensions of the electric motor cavity 24 can be changed by changing the dimensions of the cavity part 32 of the electric motor cover 30. Thus, when the dimensions of the electric motor cavity 24 need to be changed, there is no need to replace the housing 20; it suffices to replace the electric motor cover 30. That is to say, the same housing 20 of the housing assembly 10 can be adapted to a variety of electric motors with different dimensions by replacing the electric motor cap 30.

In particular, an electric motor of higher power requires a longer electric motor stator, so the length of the electric motor cavity 24 needs to be increased. The length of the electric motor cavity 24 can be increased by increasing the length of the cavity part 32 of the electric motor cover 30, such that the housing assembly 10 is able to accommodate the electric motor of higher power. Thus, for electric drive devices 100 of different powers, it is only necessary to prepare electric motor covers 30 of different specifications, so the cost of components of the electric drive device 100 is reduced.

Referring to Figs. 1 and 6, the electric drive device 100 comprises an electric connector 102. A portion of the electric connector 102 is arranged in the second housing part 22, extends from the second housing part 22 into the first housing part 21 so as to connect to the electric motor, and extends from the second housing part 22 into the third housing part 23 so as to connect to the power electronics unit. That is to say, the electrical connection between the electric motor and the power electronics unit of the electric drive device 100 is not via the electric motor cover 30 of the housing assembly 10, but via the second housing part 22. Thus, replacement of the electric motor cover 30 of the electric drive device 100 will not affect the electrical connection between the electric motor and the power electronics unit.

To further reduce the effect which replacement of the electric motor cover 30 has on the electric drive device 100, a cooling assembly of the electric drive device 100 is also specially designed. In particular, the stator windings of the electric motor are a major heat-generating component of the electric drive device 100, and generally extend along the entire length of the electric motor, including winding ends that extend to two ends of the electric motor. The cooling assembly of the electric drive device needs to fully cool the winding ends of the stator windings. In a conventional electric drive device, stator windings (including winding ends) of the electric motor are fully accommodated in the housing of the electric drive device. A cooling component for cooling the stator windings can thus be arranged in the housing. However, in the electric drive device 100 according to the present disclosure, the electric motor cavity 24 accommodating the electric motor is formed by the first housing part 21 of the housing 20 and the cavity part 32 of the electric motor cover 30, together. The winding end of the stator 111 of the electric motor 110 that is at the electric motor cover 30 side is located outside the first housing part 21, so cannot be cooled by a cooling component arranged therein.

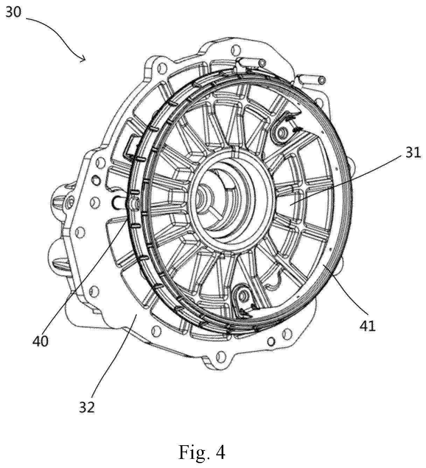

For this reason, a cooling circuit 40 is provided in the housing assembly 10 of the electric drive device 100 according to the present disclosure, and a coolant such as cooling oil flows in a circulating manner in the cooling circuit 40, cooling the electric drive device 100. Referring to Fig. 4, the cooling circuit 40 comprises an oil spray device 41 arranged on the cover part 31 of the electric motor cover 30. The oil spray device 41 is fastened to the cover part 31, and sprays cooling oil towards the winding end of the electric motor stator that is at the electric motor cover 30 side, thus being able to cool the winding end. The oil spray device 41 is removably fastened to the cover part 31. In addition, a channel for cooling oil may be arranged on a wall of each of the first housing part 21 and the cavity part 32. Once the electric motor cover 30 has been fitted to the first housing part 21, the two channels are connected in a sealed manner, enabling cooling oil to flow from the housing 20 to the electric motor cover 30, to supply cooling oil to the oil spray device 41.

According to another aspect of the present disclosure, a vehicle is proposed, the vehicle comprising the electric drive device 100 described above. The vehicle may be an electrified vehicle, for example, a battery electric vehicle (BEV), a hybrid electric vehicle (HEV), a plug-in hybrid electric vehicle (PHEV), a range-extended EV, or a fuel cell electric vehicle (FCEV). The vehicle may also be a hydrogen-powered vehicle.

Certain features, structures or characteristics in one or more embodiments of the present disclosure may be combined appropriately.

The above is a description of the present disclosure and should not be regarded as limiting it. Although a number of exemplary embodiments of the present disclosure have been described, those skilled in the art will readily understand that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure; the present disclosure should not be considered to be limited to the specific embodiments disclosed, and modifications to the disclosed embodiments and other embodiments are intended to be included within the scope of the present disclosure.

## Claims

1. A housing assembly (10) for an electric drive device (100), **characterized in that** the housing assembly (10) comprises:
a housing (20), comprising
a first housing portion (21), the first housing portion (21) at least partially accommodating an electric motor (110) of the electric drive device (10);
a second housing portion (22) located at one end of the first housing portion (21), the second housing portion (22) accommodating a speed reducer of the electric drive device (10);
an electric motor cover (30), assembled to another end of the first housing portion (21), comprising a cover portion (31) and a cavity portion (32), the cavity portion (32) and the first housing portion (21) together forming an electric motor cavity (24) for accommodating the electric motor (110).

2. The housing assembly (10) according to claim 1, **characterized in that**
a dimension of the cavity portion (32) is determined according to the power of the electric motor accommodated in the electric drive device (10).

3. The housing assembly (10) according to claim 1 or 2, **characterized in that** the first housing portion (21) and the second housing portion (22) are integrally formed.

4. The housing assembly (10) according to one of the preceding claims, **characterized in that**
the housing (20) further comprises a third housing portion (23) arranged adjacent to the first housing portion (21), the third housing portion (23) accommodating power electronics of the electric drive device (10).

5. The housing assembly (10) according to one of the preceding claims, **characterized in that**
an electric connector (102) for the electric motor of the electric drive device (10) extends from the second housing portion (22) into the first housing portion (21).

6. The housing assembly (10) according to claim 4, **characterized in that** the electric connector (102) extends from the second housing portion (22) into the third housing portion (23).

7. The housing assembly (10) according to one of the preceding claims, **characterized in that**
the housing assembly (10) is provided with a cooling circuit (40).

8. The housing assembly (10) according to claim 7, **characterized in that**
the cooling circuit (40) comprises an oil spray device (41) arranged on the cover portion (31).

9. The housing assembly (10) according to claim 4, **characterized in that**
the first housing portion (21), the second housing portion (22) and the third housing portion (23) are integrally formed by casting.

10. An electric drive device (100), comprising the housing assembly (10) according to any one of claims 1-9.

11. A vehicle, comprising the electric drive device (100) according to claim 10.
